# EUROPEAN PATENT SPECIFICATION

(11) **EP 0 346 980 B1**
(45) Date of publication and mention of the grant of the patent: **12.04.1995**
(21) Application number: 89201492.9
(22) Date of filing: 09.06.1989
(51) Int. Cl.: H04N 5/45

(54) **Method and apparatus for the recording and replay of interlaced signals**
Verfahren und Vorrichtung zur Aufzeichnung und Wiedergabe von Zwischenzeilensignalen
Méthode et dispositif d'enregistrement et de reproduction de signaux entrelacés

(30) Priority: 15.06.1988 US 209452; 21.10.1988 US 261202
(43) Date of publication of application: 20.12.1989
(73) Proprietor: PHILIPS ELECTRONICS NORTH AMERICA CORPORATION, New York, N.Y. 10017 (US)
(72) Inventor: Phillips, Larry G., NL-5656 AA Eindhoven (NL)
(74) Representative: Kooiman, Josephus Johannes Antonius

(56) References cited:
- EP-A- 0 249 281
- US-A- 4 724 487

## Description

### Field of the Invention

The present invention relates to a method and apparatus for recording and replaying interlaced signals such as, for example, televisions signals.

### BACKGROUND OF THE INVENTION

Since the present invention will be described with reference to a television receiver having a picture-in-picture (PIP) feature, basic television theory insofar as required for a thorough understanding of the invention will be briefly summarized here.

One complete TV picture is called a frame and is composed of two fields which are offset both temporally and spatially. At the TV receiver the fields must be interlaced in the correct order to reconstruct the transmitted picture. This is accomplished by offsetting vertical synchronization relative to horizontal synchronization by half a horizontal line from field to field. The vertical synchronization pulse leading edge coincides with horizontal synchronization in field one whereas the leading edge in field two is halfway across the horizontal line.

Conventional processing of interlaced television signals is based on the assumption that the even fields, (i.e. the fields furnishing the even lines) and the odd fields (furnishing the odd numbered lines) must be maintained as such throughout all processing.

Vertical synchronization is detected in the TV receiver by an integration process or a countdown process which destroys the exact relationship between horizontal and vertical synchronization as described above, although the half line offset is maintained. This is sufficient for TV receiver interlace, but makes field detection (i.e. determining which field is the even field and which field is the odd field when both fields are to be stored in, or read from memory) difficult.

In a PIP system, a television signal from a second channel or another source is sub-sampled to decrease its size and displayed within a larger television signal. Specifically, in the vertical direction, every third line is maintained, while the remaining two lines are dropped. Similarly, the picture is horizontally sub-sampled so as to decrease its width. This reduced picture is stored in memory in write cycles controlled by the PIP source synchronization signals.

In order to be displayed as part of the main TV signal, the PIP signal must be read from memory in synchronization with the main signal. The signal read from memory must then be combined with the main TV signal (herein, as an example, the main luminance signal) to yield a main luminance signal with inserted PIP.

In this system, the PIP source and main picture source are synchronous and tend to drift relative to each other. Due to this drift, and because the read-out takes place faster than the recording in the memory, the display side will at some time want to read from memory the same line in the same field that is currently being recorded. For the remainder of the PIP, the information read from memory will be a thirtieth of a second older than the information immediately preceding it. The same will occur on subsequent PIPs. This causes visible distortion, particularly in action scenes and when a camera change occurs.

US-A-4,724,487 discloses an interlace inversion detector for a PIP video signal generator, to generate a signal indicating an interlace inversion condition in response to main and PIP odd/even field signals obtained from main and PIP synchronization component separators, respectively. A correction to the interlacing is made in response to the interlace inversion signal.

EP-A-0,249,281 discloses a television picture display device which can display a compressed sub-picture of a second video signal source in a main picture of a first video signal source. A correct mutual location of the picture information in the sub-picture with respect to the main picture is always obtained by means of a first field identification circuit for the sub-picture, a second even-odd field identification circuit for the main picture, an interlacing circuit and an interlacing-correction circuit. Thus two troublesome field identification circuits are required to obtain a correct mutual location of the picture information in the sub-picture with respect to the main picture.

### SUMMARY OF THE INVENTION

It is a principal object of the present invention to assure that a baseband interlaced-video signal is written into memory and read from memory in a manner which preserves the temporal and spatial relationships between the lines of the two fields. This is to be accomplished without requiring identification of the even and odd fields in the received signal.

Another object of the present invention is to minimize interlace errors due to crossing of the vertical synchronization signal over a horizontal synchronization signal (vertical jitter). Finally, the record and read-out techniques of the present invention should be compatible with both NTSC and PAL systems.

To achieve its principal object, a first aspect of the invention provides an apparatus as defined in claim 1. A second aspect of the invention provides a method as defined in claim 18. Advantageous embodiments are defined in the subclaims.

In accordance with an embodiment of the present invention, the horizontal and vertical synchronization signals are separated from an incoming interlaced signal having an odd field and an even field. A regenerated vertical synchronization signal is furnished in response to the first horizontal synchronization signal following a vertical synchronization signal in alternate fields. These alternate fields are considered top fields. This regenerated vertical synchronization signal also resets a counter. The counter counts horizontal synchronization signals to a count of five repetitively. In the remaining fields, herein called bottom fields, the regenerated vertical synchronization signal is furnished in response to the horizontal synchronization signal following the count of five on the above-mentioned counter after receipt of a vertical synchronization signal. It should be noted that, according to the present invention, it makes no difference whether the even field or the odd field becomes top field. The field assignment may even be switched during operation as will be shown below.

In a preferred embodiment, a horizontal window signal blocks any vertical synchronization signal occurring within predetermined proximity of a horizontal synchronization signal. This blocking prevents a field change from bottom to top field. This change is then carried out upon receipt of the next vertical synchronization signal. In other words, when a vertical synchronization signal occurs too closely to a horizontal synchronization signal, a field switch occurs. The field which previously was bottom field becomes top field and vice versa.

In accordance with a further preferred embodiment, a field switch, i.e. a change from top to bottom or bottom to top field which would otherwise take place following the next received vertical synchronizing signal, is inhibited when the line read from memory on the display side is the same as the line being currently recorded in the same memory location. Thereby, the visual distortion described earlier is corrected with minimum addition to the field generator used to indicate top field and bottom field in accordance with the invention, and more specifically, for an embodiment of that invention having separate memory locations for top field and bottom field.

The foregoing and other objects, aspects and advantages of the invention will be better understood from the following description when read in conjunction with the drawing.

### BRIEF DESCRIPTION OF THE DRAWINGS

Fig. 1 illustrates the fields together constituting a frame of an interlaced television picture;
Fig. 2 illustrates the relative position of vertical and horizontal synchronization signals in sequential fields;
Fig. 3a and 3b illustrate the interchangeability of field 1 and field 2, as top and bottom field in an interlaced television signal;
Fig. 4 is a block diagram of the present invention interconnected with a picture-in-picture (PIP) system;
Fig. 5 is a timing diagram illustrating the basic method of the present invention;
Fig. 6 is a time diagram illustrating a field switch;
Fig. 7 is a schematic diagram illustrating a field generator of the present invention;
Fig. 8a illustrates a top line counter;
Fig. 8b is a horizontal window generator;
Fig. 9 is an alternative embodiment of a field generator;
Fig. 10 is a schematic block diagram of an incomplete line signal generator; and
Fig. 11 is a schematic diagram of another field generator incorporating the present invention.

### DESCRIPTION OF THE PREFERRED EMBODIMENT

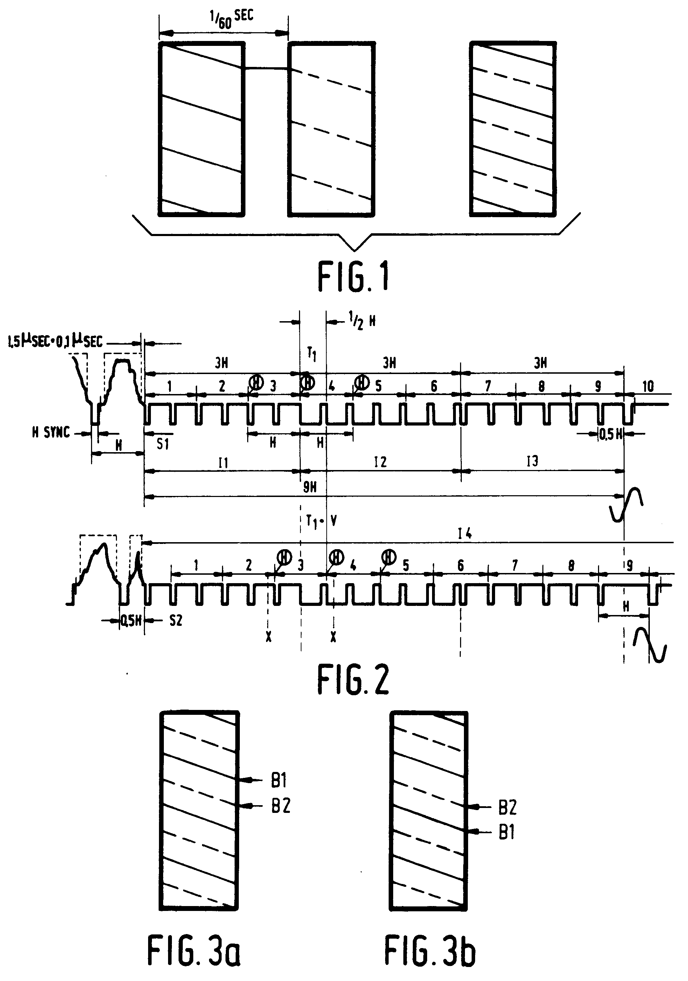

Fig. 1 shows the temporal and spatial offset of the fields together constituting a frame of an interlaced television picture. The lines of the first field are interrupted, the lines of the second field are interrupted.

Fig. 2 illustrates the relative position of vertical and horizontal synchronization signals in sequential fields, wherein:
S1 denotes the start of field 1;
S2 denotes the start of field 2;
I1 denotes a pre-equalizing pulse interval;
I2 denotes a vertical sync pulse interval;
I3 denotes a post-equalizing pulse interval; and
I4 denotes the color field II vertical blanking interval.

The basic concept underlying the present invention is illustrated in Fig. 3a and 3b. B1 denotes the beginning of field 1 storage and B2 denotes the beginning of field 2 storage. In Fig. 3a, the storage process was begun with a line in field 1. The top line of field 2 is spatially below the top line of field 1 in storage, as are all subsequent lines of field 2 below the respective lines of field 1. Therefore field 1 is top field and field 2 is bottom field. Similarly, in Fig. 3b field 1 is spatially below field 2. Therefore field 1 is bottom field and field 2 is top field. It will be noted that which is top field and which is bottom field makes no difference as long as lines of field 1, for example, which were stored above lines of field 2, retain that position in the final display, and vice versa.

The specific embodiment of the invention to be described is that of a field generator incorporated in a picture-in-picture (PIP) television system. Only those portions of a PIP system required for understanding of the present invention will be described.

In a PIP system wherein a television signal from a second channel of another source is sub-sampled to decrease its size and displayed within a larger television signal. Specifically, in the vertical direction, every third line is maintained, while the remaining two lines are dropped. Similarly, the picture is horizontally sub-sampled so as to decrease its width. This reduced picture is stored in memory in write cycles controlled by the PIP synchronization signals.

In order to be displayed as part of the main TV signal, the PIP signal must then be read from memory in synchronization with the main signal. The signal read from memory must then be combined with the main TV signal (herein, as an example, the main luminance signal) to yield a main luminance signal with inserted PIP.

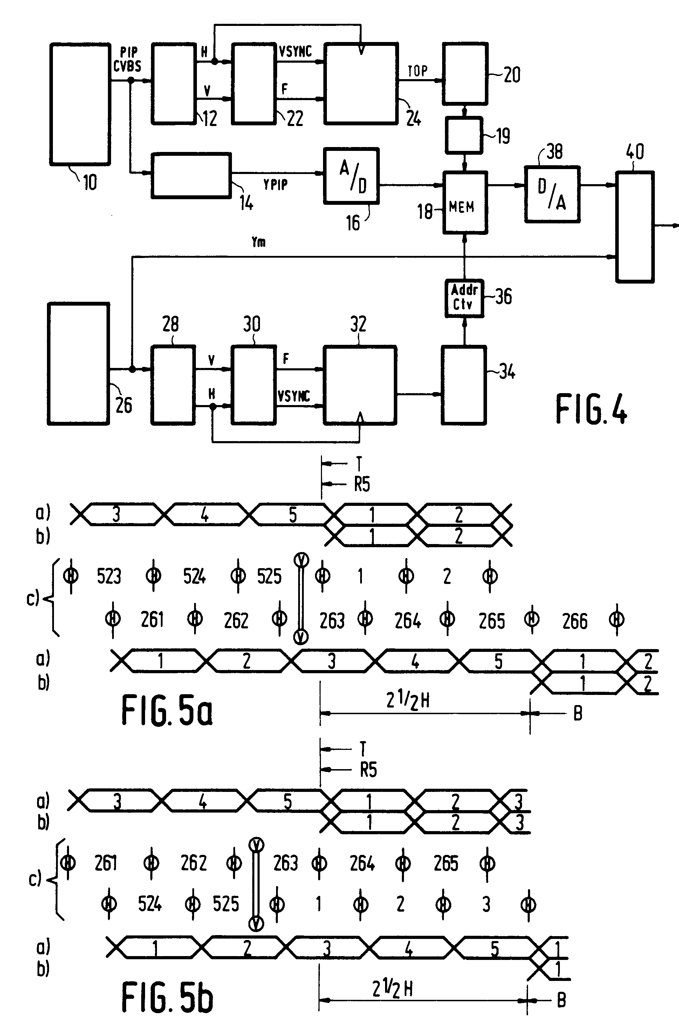

The overall diagram of the PIP system using an analog switch and incorporating the field generator of the present invention is illustrated in Fig. 4. In that figure,
CVBS denotes the composite video baseband signal;
H denotes the horizontal sync signal;
V denotes the vertical sync signal;
Vsync denotes a regenerated vertical sync signal;
F denotes top/bottom field definition;
TOP is active at top line;
Ym denotes main signal luminance; and
Y_{PIP} denotes PIP signal luminance.
A PIP tuner and demodulator 10 furnishes a PIP baseband signal. A synchronization signal processor 12 removes the horizontal (H) and vertical (V) synchronization pulses from the baseband signal. At the same time, the luminance signal is extracted and applied to a sub-sample filter 14. The output of the sub-sample filter is subjected to analog/digital conversion. The output of analog/digital converter 16 is recorded in a memory 18 at addresses generated by an address counter 19 under control of a memory write cycle control 20. Control 20 is operative partially under control of PIP H and V synchronization signals.

Interconnected between synchronization signal processor 12 and memory write cycle control 20 is a field generator 22 and a top line counter 24. The field generator constitutes an embodiment of the present invention. Field generator 22 receives the horizontal and vertical synchronization pulses from the output of synchronization signal processor 12. The output of field generator 22 includes a regenerated vertical synchronization signal, VSYNC, and a so-called selector signal whose function and origin will be described below. Both signals at the output of field generator 22 are applied to a top line counter 24, also to be described below, which further receives the horizontal synchronization signals at the output of synchronization signal processor 12. The output of top line counter 24 is a top line signal which forms part of the control for memory write cycle control 20.

The main signal into which the PIP signal is to be incorporated is received at a main tuner and demodulator 26, similar in all respects to PIP tuner 10 if both PIP and main signals are broadcast signals. The output of stage 26 is a baseband signal which is subjected to synchronization signal separation in a syncrhonization signal processor 28. The output signals, V and H, are applied to a field generator 30 substantially identical to field generator 22. The output of this field generator, as was the output of field generator 22, are a selector signal and a regenerated vertical synchronization signal VSYNC. These signals are applied to a top line counter 32. Top line counter 32 also receives the main horizontal synchronization signal H. The output of top line counter 32 is applied to a memory read cycle control stage 34. The output of stage 34 controls the read-out from memory 18.

The output from memory 18, furnished under control of stage 34, is applied to a digital/analog converter 38, whose output, in turn is applied to an analog switch 40. The second input to analog switch 40 is the main luminance signal derived from stage 26. The output of analog switch 40 is thus a main luminance signal with inserted PIP.

Alternatively, the main and PIP signals could be combined digitally in a multiplexing stage, and the output of the multiplexer be subjected to digital/analog conversion. The particular method or apparatus for combining the two signals is not part of the present invention. The problem addressed by the present invention is recording in and readout from memory 18 so that the resultant PIP picture is correctly interlaced.

Before describing the operation and construction of the two field generators and top line counters, reference will be made to Figs. 5a and 5b which illustrate that either field 1 or field 2 may be top field when an interlaced picture is stored in/read out from memory.
In Fig. 5,
lines a) indicate a 5 line count;
lines b) indicate a picture top count;
lines c) indicate TV line numbers;
T indicates begin of top field;
R5 indicates 5 line count master reset; and
B indicates begin of bottom field.

A five line counter which counts five horizontal lines repetitively is used. Since the number of lines per frame is divisible by five for both NTSC and PAL systems, the field generator will be compatible with both of these TV systems. This five line counter is reset by the first horizontal synchronization signal for every other field. This horizontal synchronization signal also switches the field selector signal from "1" to "0". The field on which the reset operation occurs becomes the top field. Thus, according to the top line of Fig. 5a, field 1 is the top field, while in Fig. 5b, field 2 is the top field.

For alternate fields there is no reset for the first horizontal synchronization signal following vertical synchronization. The top-to-bottom field change occurs when the five line counter reaches the count of 5 following receipt of the next vertical synchronization signal. As illustrated, Figs. 5a and 5b, since there are 262-1/2 lines per field, the next vertical synchronization signal will be received on count 2-1/2 of the five line counter. The count of 5, i.e. the indicated start of bottom field, will take place 2-1/2 counts later. Since the desired offset between top and bottom field is 1/2 a horizontal line for the main channel and 1-1/2 horizontal lines for the PIP channel, a one or two line correction is required. How this is achieved will be explained during the description of the operation and construction of the field generator and top line counter below.

It should, however, be noted here that the time relationship between the horizontal and vertical synchronization signals is irrelevant on the bottom field since the selector signal will always change in response to the horizontal synchronization signal following the count of five on the counter.

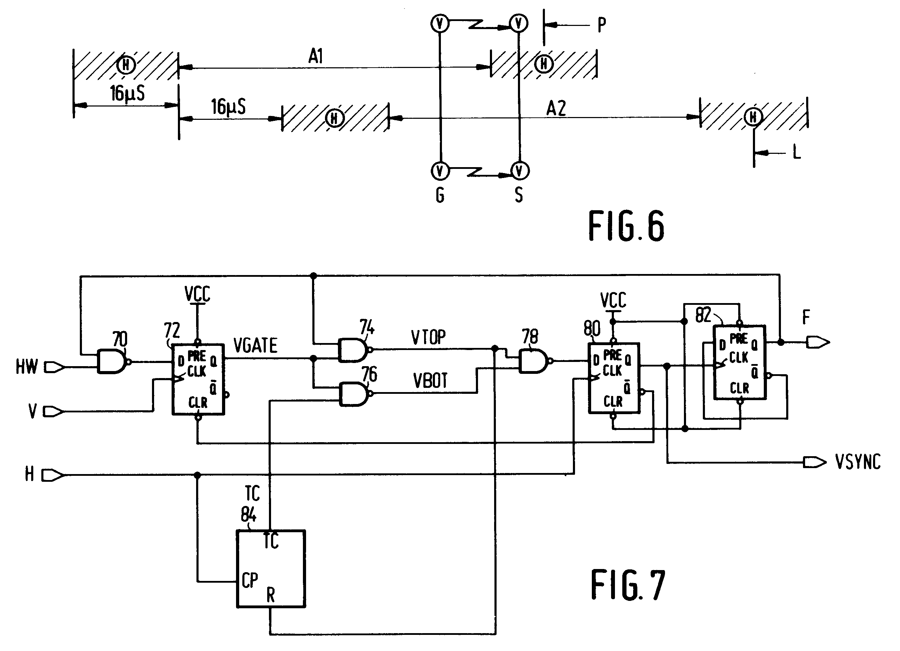

On the top field, movement of the vertical synchronization signal across the horizontal synchronization signal can cause interlace errors. It is therefore desired that the V signal at the input of the field generator become effective only if outside of a certain time zone (shaded area in Fig. 6) around the horizontal synchronization signal. This time zone should be sufficiently large that there is little probability of the V signal jumping back and forth across it. On the other hand, as will be discussed below, an interlace error may occur when the V signal moves into the shaded area. Thus, a compromise must be reached. In a preferred embodiment, the shaded area is about one quarter of the horizontal line or approximately 16 microseconds.

The horizontal window signal (HW) applied to the field generator illustrated in Figs. 7, 9 or 11, creates this zone. For alternate fields the field change will be inhibited whenever a vertical synchronization signal is within the predetermined zone of the horizontal synchronization signal. In Fig. 6,
A and B indicate fields;
P indicates a top field which begins prior to a field switch;
L indicates a top field which begins after a field switch;
A₁ indicates a VSYNC area before a field switch;
A₂ indicates a VSYNC area after a field switch;
G indicates that the vertical sync is in good area on both fields; and
S indicates that the vertical sync moves into bad area on top field causing a field switch. It should be noted that the horizontal window will block any V signal occurring during the time HW is high and the field output is high from the field generator. Thus, for the position (timing) of the vertical synchronization signal relative to the horizontal synchronization signal illustrated for the right most "v" in field A of Fig. 6, no field change would occur. This constitutes an interlace error which is, however, corrected at the start of the next field.

When vertical synchronization signal occurs in the vicinity of the horizontal synchronization signal in one field, its position in the next field will be approximately half way between two horizontal synchronization pulses. Since the change from bottom field to top field which was to occur in field A did not take place, this change will be carried out for field B. In other words, field B, which was previously the bottom field, will now be the top field. This constitutes a field switch. However, the error introduced by failure to change to the top field for field A lasts only for the duration of field A and is immediately corrected by field B becoming the top field upon occurrence of the next vertical synchronization signal. Further, the situation where the vertical synchronization signal occurs within the shaded area generally takes place only when the equipment is first turned on. At that time, an interlace error which lasts only 1/60th of a second is completely unnoticeable.

The construction and operation of the field generator will now be explained. A schematic diagram of the field generator is illustrated in Fig. 7. This field generator has three inputs, namely a horizontal window input HW, a vertical synchronization input V and a horizontal synchronization input H. The horizontal window input is applied to a first input of a NAND gate 70 whose output is applied to the D input of a flip-flop 72. The clock input of flip-flop 72 receives the vertical synchronization signal. The Q output of flip-flop 72 is connected to the first input of a NAND gate 74 and the first input of a NAND gate 76. The output of NAND gate 74 is denoted by "VTOP" and constitutes a field signal which is applied as an input to a NAND gate 78. The second input to NAND gate 78 is the "VBOT" signal (also a field signal) derived from the output of NAND gate 76. The output of NAND gate 78 is connected to the D input of a flip-flop 80 whose clock input receives the horizontal synchronization signal H, whose inverse Q output is connected to the clear input CLR of flip-flop 72. The Q output of flip-flop 80 is connected to the clock input of a flip-flop 82, whose inverse Q output is connected to its D input. The Q output of flip-flop 82 is the selector signal F. This signal is 0 for top field, 1 for bottom field. These 0 and 1 signals are also called the first and second selector signals, respectively, herein. The selector signal is fed back to the second input of NAND gate 70 and the second input of NAND gate 74.

The horizontal synchronization signal is also applied to the clock input of a five line counter 84. Counter 84 has a terminal count output TC connected to th second input of NAND gate 76. The output of NAND gate 74 is connected to the reset input R of counter 84.

The above-described field generator operates as follows:

During the time of a horizontal window, the first (HW) input to NAND gate 70 is low. The output of NAND gate 70 will thus be high, independent of the field signal. The next V signal will therefore cause the VGATE output of flip-flop 72 to be high. The output of NAND gate 74 will thus be 1 during the top field, and 0 during the bottom field until flip-flop 72 is reset. On the other hand, the output of NAND gate 76 will be 1 until the terminal count on counter 84 occurs, at which time it will go to 0. It will remain at 0 till the next count on counter 84, since, as will be shown below, flip-flop 72 is not reset until later.

Now, assuming first that the system is in the top field, i.e. the output of both NAND gate 74 and NAND gate 76 is 1, then the output of NAND gate 78 is 0 and no further action occurs until counter 84 reaches its terminal count. At that time NAND gate 76 switches to 0, causing the output of NAND gate 78 to switch to a 1. The next horizontal synchronization (H) signal clocks the 1 signal appearing at the D input of flip-flop 80 to its output, causing the VSYNC (regenerated vertical synchronization) signal to be generated and flip-flop 82 to switch to the state in which the selector signal signifying bottom field, i.e. a 1 at its Q output, is furnished. The switching of flip-flop 80 also resets flip-flop 72, which brings the VGATE signal at the output of flip-flop 72 to 0. This cause the output og NAND gates 74 and 76 to be 1, independent of the field and independent of the count on five line counter 84. Flip-flop 80 is set to 0 by the next H signal, causing the VSYNC output to return to 0 and the output of flip-flop 82 to remain unchanged until the next vertical synchronization signal is received. VSYNC is thus active for the duration of one line during the bottom field.

When a V signal arrives while HW is low, and a 1 is at the output of flip-flop 82, the output of NAND gate 74 will be 0, while the output of NAND gate 76 will be a 1. The output of NAND gate 78 is thus 1. Upon receipt of the next horizontal synchronization signal, the 1 at the set input of flip-flop 80 will be transferred to its Q output. The VSYNC signal will thus be generated and flip-flop 82 will change state. Reset of flip-flop 72 will take place as discussed above, causing the VGATE signal to go to 0. It will be noted that the switch of flip-flop 82 took place upon receipt of the first horizontal synchronization signal following vertical synchronization. The VSYNC signal which, as above, is maintained for one line, has also occurred upon receipt of the first horizontal synchronization signal following vertical synchronization.

On the other hand, as discussed above, the VSYNC signal was delayed by 2-1/2 counts relative to vertical synchronization for the bottom field. Since there should be only a half line offset between the two fields for correct interlacing in the main field, and a 1-1/2 line offset for PIP recording, correction must be made.

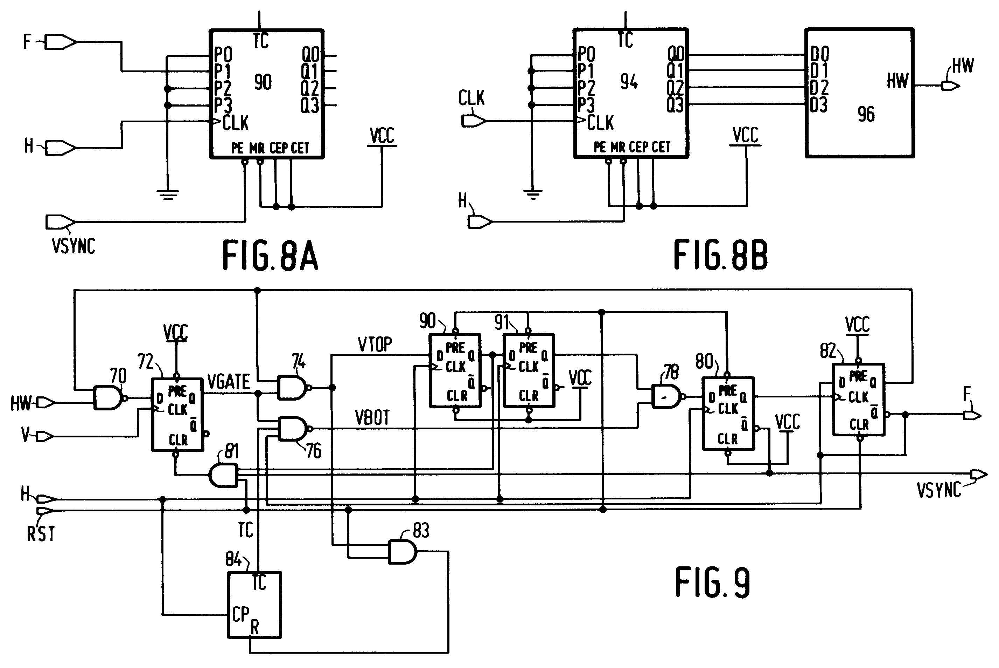

Fig. 8a illustrates a top line counter, i.e. boxes 24 and 32 in Fig. 4. The top line counter counts horizontal synchronization signals from the time it is loaded until it reaches the count representing the first active line for storage or display. At that time it generates the top line signal which initiates recording or readout.

Counter 90 is loaded by each VSYNC signal at the output of flip-flop 80 in Fig. 7.

Counter 90 has a clock input CLK to which the horizontal synchronization signal H is applied. It further has P0, P1, P2, and P3 inputs, all except P1 being connected to ground. P1 receives the selector signal F, i.e. the output of flip-flop 82 in Fig. 7. Counter 90 also has four outputs Q0, Q1, Q2 and Q3 respectively.

When the selector signal F is a 1, indicating a bottom field, the VSYNC signal loads the counter with a two. On the other hand, during a top field, the counter is loaded with zero.
One possible circuit for generating the HW signal is illustrated in Fig. 8(b). The H signals and a clock signal CLK with a frequency at least 5 times f_{H} are applied to a counter 94. The Hw signal is generated by decoding the counter outputs as represented by the logic block 96 in the figure.

An alternative embodiment of the field generator is illustrated in Fig. 9. Corresponding parts of the circuit have the same reference numerals as in Fig. 7.

The main difference between the embodiment of Fig. 9 and that of Fig. 7 is in the timing of the first selector signal, namely initiation of the toggling of flip-flop 80 and 82 during top field. In the embodiment of Fig. 7, the change in the flip-flop is triggered by the horizontal synchronization signal immediately following the vertical synchronization signal. In Fig. 9, triggering of flip-flop 82 is delayed by two counts by means of flip-flops 90 and 91. The top-to-bottom and bottom-to-top transitions of flip-flop 82 will thus occur for the same line in each field. There is no need to preload the top line counter to advance it by two step for the bottom field relative to the top field.

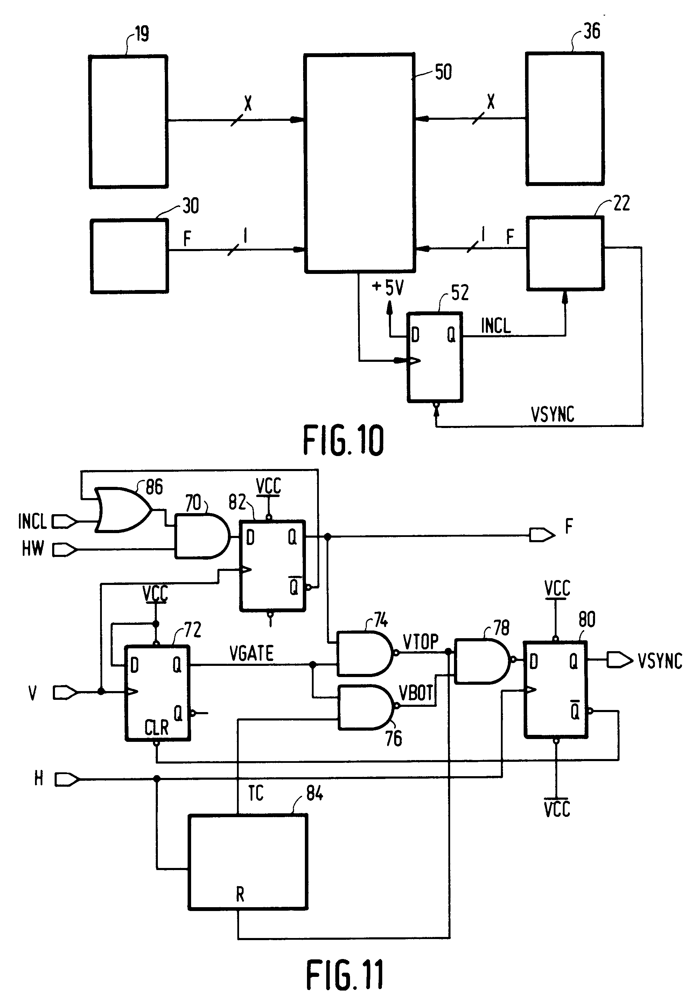

The specific problem solved by the embodiment of Figs. 10 and 11 is that the PIP and main synchronization signals drift with respect to one another, i.e. are asynchronous. Further signals are recorded in memory 18 during the time required for a full field. On the other hand, they are read from memory, at a much faster rate since the sub-sampled PIP picture will appear in only one-ninth of the area of the main picture. Thus if read-out occurs from the same line of the same field as is currently being recorded in memory, the read-out will overtake the recording and the portion of the PIP picture read out after the line in which equality between recording and read out occurs will be older than the portion above it. The same condition will occur in subsequent fields, since the drift of the main relative to the PIP picture is generally quite slow. It is thus the purpose of the present invention to cause a switch to the other field either on the recording or the read out side so that information during readout from top to bottom is progressively newer information, as is the case in conventional television.

Generation of a signal indicative that the same line is being read as is currently being recorded takes place as illustrated in Fig. 10. The signal is herein called the incomplete line signal. Referring now to Fig. 10, the main and PIP address counters, corresponding to address counters 19 and 36 in Fig. 4, generate addresses on a plurality of output lines. The address numbers are applied to a comparator 50. Comparator 50 also receives the selector signal output from the main field generator and the PIP field generator and compares the two. Specifically, the selector signal outputs are processed as the most significant address bit. When the addresses and the field selector outputs of the main television picture and the corresponding quantities of the PIP picture are equal, a 1 appears at the output of magnitude comparator 50. This "1" signal causes a "1" signal at the Q output of a flip-flop 52. The output of flip-flop 52 is the incomplete line signal INCL. In Fig. 10, this is indicated as being applied to the PIP field generator 22. It could equally well be applied to the main field generator 30. The VSYNC output of the field generator to which the INCL signal was applied resets flip-flop 52.

A PIP field generator receiving an incomplete line signal is illustrated in Fig. 11. In Fig. 11, the incomplete line signal (INCL) from flip-flop 52 is applied to one input of an OR-gate 86 whose other input receives the inverse Q output of flip-flop 82. The output of OR-gate 86 is applied to one input of AND-gate 70 whose other input receives the horizontal window (HW) signal. The output of AND-gate 70 is applied to the D input of flip-flop 82. The Q output of flip-flop 82 is the field selector signal.

Flip-flop 82 has a clock input which receives the incoming vertical synchronization signal (V) from either sync processor 12 or sync processor 28. For this embodiment, field generator 30 is choses, so that the V signal is supplied by sync processor 28. The V signals also are applied to the clock input of the flip-flop 72. The D input of flip-flop 72 is tied to the DC supply voltage VCC. The Q output of flip-flop 72 furnishes a V-Gate signal which is applied to one input each of two NAND-gates 74, 76. The second input of NAND-gate 74 receives the field selector signal. The second input of NAND-gate 76 is tied to the terminal count (TC) output of a counter 84. The outputs of NAND-gates 74 and 76 are applied to respective inputs of NAND-gate 78. The output of NAND-gate 74 is also tied to the reset input R of counter 84. Counter 84 counts horizontal synchronization (H) signals applied to its counting input. The horizontal synchronization signals are also applied to the clock input of flip-flop 80 whsoe D input receives the output of NAND-gate 78. The Q output of flip-flop 80 is the VSYNC signal. The inverse Q̅ output of flip-flop 80 is tied to the clear input CLR of flip-flop 72.

In the operation of this field generator, contrary to that disclosed in Fig. 7, the horizontal window (HW) signal is designed to be high when the vertical synchronization signal occurs at an acceptable distance from the horizontal synchronization signal. Counter 84 resets when the VTOP signal is low.

Assuming now that the field selector signal is "0" which, for this particular embodiment signifies a bottom field, then a "1" signal will be applied to the first input of OR-gate 86. The output of OR-gate 86 is thus a "1" independent of the absence or presence of the incomplete line signal. During the time the HW signal is high, AND-gate 70 will have a "1" output. In response to an incoming V signal occurring during the time the output of AND gate 70 is high, a "1" signal will appear at the Q output of flip-flop 82. Thus, the field selector signal has switched to top field, independent of the absence or presence of the INCL signal. The latter is effective only on alternate fields in this embodiment.

The V signal which caused the selector signal to switch from 0 to 1 also causes the VGATE signal to go to 1, slightly delayed with respect to the field selector signal change. The output of NAND-gate 74 goes to 0, resetting the five line counter 84. NAND-gate 76 has a 1 at its output. The output of NAND-gate 78 is a 1. The H signal following the V signal which switched the field selector signal therefore clocks a 1 to the output of flip-flop 80, a VSYNC signal is generated. The inverse Q output of flip-flop 80 is a 0 which clears flip-flop 72. This in turn causes the VGATE signal to go to 0, the output of NAND-gate 74 goes to 1, allowing counter 84 to resume counting. The output of NAND-gate 76 remains at 1, causing the output of NAND-gate 78 to be a 0. At the next horizontal sync pulse the VSYNC output therefore also goes to 0. The VSYNC signal thus exists for a one line interval as does the resetting of counter 84.

With the selector signal at 1 and the inverse Q output of flip-flop 82 at 0, the output of OR-gate 86 will be a 1 or a 0 depending upon the state of the INCL signal. When the INCL signal is 0, indicating that readout is taking place from memory locations other than those in which recording is taking place, then the output of OR-gate 86 is 0 causing the output of AND-gate 70 to be a 0 independent of the state of the HW signal. The next V signal then causes a 0 to be clocked to the output of flip-flop 82, i.e. a field change from top to bottom field has occurred.

If, however, the INCL signal is 1, the output of OR-gate 86 will be a 1, causing the output of NAND-gate 70 to be a 1 during the time of the HW signal. The next V signal will therefore be ineffective, i.e. the selector signal will remain a 1. A field switch has occurred, i.e. the change in field which should have happened at this time has been suppressed.

If the selector signal has remained a 1, the operation is as described above. If, on the other hand, the field change occurred, i.e. if the selector signal is 0, the VTOP signal will be 1, while the VBOT signal will be 1 until the terminal count is reached. When the terminal count is reached the VBOT signal will go to 0, causing the output of NAND-gate 78 to go to a 1. As before, the 1 at the ouput of NAND-gate 78 will be clocked to the Q output of flip-flop 80 by the next H signal. A VSYNC signal is thus again generated.

The operation of the field generator in Fig. 11 is such that a VSYNC signal is generated for each incoming V signal. The VSYNC signal lasts the interval of one horizontal line. Further, in the absence of an incomplete line signal (INCL signal) each incoming V signal will cause a change in the field selector signal. This change will be inhibited for an incoming INCL signal during a top field. The fact that the INCL signal is effective for top-to-bottom changes only does not cause any visual difficulties in the display, since the duration of a field is only 1/60th of a second. It would of course be possible to devise a circuit in which the INCL signal is effective for both fields or only during bottom fields. Such embodiments would be obvious to one skilled in the art and are intended to be included in the claims.

It should further be noted that while the field selector signals are utilized as the most significant address bit in the embodiment illustrated in this application, this is a matter of convenience only and other embodiments could readily be devised for the address comparator scheme illustrated in Fig. 10.

It is evident from the above descriptions that the field generator of the present invention provides a simple way to process an incoming interlaced signal to preserve the correct spatial and temporal relationship between the two fields without requiring a predetermined one of the fields to be top field and the other to be bottom field. Either field can be top or bottom field.

In addition, the initiation of only one of the fields, here the top field, is dependent on the relative timing of the horizontal and vertical synchronization signals. Artifacts resulting from incorrect interlace due to crossing of the vertical over the horizontal synchronization signal are thus minimized.

Although the invention has been illustrated in some preferred embodiments, it is not to be limited thereto. Other embodiments will be obvious to one skilled in the art and are intended to be encompassed by the following claims.

## Claims

1. Apparatus for processing an interlaced video signal having even and odd fields, comprising memory means (18) having first and second groups of memory locations; the apparatus being characterized by:
means (10, 12, 22, 24) coupled to receive said interlaced signal for generating a first field selector signal (F) signifying an arbitrarily selected one of said even and odd fields as top field, and a second field selector signal (1-F) signifying the other of said even and odd fields as bottom field;
means (19) coupled to said generating means (10, 12, 22, 24) for recording top field information in said first memory locations and bottom field information in said second memory locations under control of said first (F) and second (1-F) field selector signals, respectively; and
means (28-36) for reading said top field information and said bottom field information from said first and second memory locations.

2. An apparatus as claimed in claim 1, wherein said interlaced video signal comprises vertical (V) and horizontal (H) synchronizing signals, and said generating means (10, 12, 22, 24) comprise:
means (80, 72, 74) for furnishing a top field signal (VTOP) in response to a vertical synchronizing signal (V) followed by a horizontal synchronizing signal (H);
counting means (84) reset in response to said top field signal (VTOP) for counting horizontal synchronizing signals (H);
means (76) for generating a bottom field signal (VBOT) upon receipt of a subsequent one of said vertical synchronizing signals (V) and a predetermined count on said counting means (84); and
means (78-82) for generating said selector signals (F, 1-F) in response to said top (VTOP) and bottom (VBOT) field signals.

3. An apparatus as claimed in claim 1, wherein said video signal has vertical (V) and horizontal (H) synchronization signals, and said generating means (10, 12, 22, 24) comprise:
input means (10, 12) for receiving said interlaced signal,
first means (22; 74-76) coupled to said input means (10, 12) and responsive at least in part to said vertical synchronization signals (V) for generating a top field signal (VTOP) selecting the then present field as top field and a bottom field signal (VBOT) selecting the next following field as bottom field; and
timing means (22; 78-82) coupled to said first means (22; 74-76) and responsive at least in part to said horizontal synchronization signals (H) for generating a first selector signal (F) indicative of the presence of a top field and a second selector signal (1-F) indicative of the presence of a bottom field, respectively, in response to said top and bottom field signals (VTOP, VBOT), respectively.

4. Apparatus as set forth in Claim 3, further comprising means (80-74) for applying said second selector signal (1-F) to said first means (22; 74-76), so that said first means furnishes said first field signal (VTOP) in response to a vertical synchronization signal (V) received in the presence of said second selector signal (1-F).

5. Apparatus as set forth in Claim 4, further comprising counting means (84) having a clock input (CP), a reset input (R), and a terminal count output (TC) supplying a terminal count signal upon receipt of a predetermined number of horizontal synchronization signals (H) following reset of said counting means (84);
first connecting means for connecting said first means (22; 74-76) to said reset input (R) for resetting said counting means (84) in response to said first field signal (VTOP); and
means for applying said horizontal synchronization signals (H) to said clock input (CP).

6. Apparatus as set forth in Claim 5, wherein said first means (22; 74-76) comprises:
gating means (76) having a gating input for generating said second field signal (VBOT) in response to a gating signal at said gating input; and
means for connecting said terminal count output (TC) of said counting means (84) to said gating input so that said second field signal (VBOT) occurs upon receipt of said terminal count signal.

7. Apparatus as set forth in Claim 6, wherein said terminal count signal is furnished at a count of 5.

8. Apparatus as set forth in Claim 3, wherein said timing means (22; 78-82) comprises means for furnishing a regenerated vertical synchronization signal (VSYNC) in response to each of said field signals (VTOP, VBOT) and for terminating each of said regenerated vertical synchronization signals (VSYNC) following receipt of a predetermined number of horizontal synchronization signals (H).

9. Apparatus as set forth in Claim 8, wherein said timing means (22; 78-82) further comprises flip-flop means (82) having a Q output having a first state furnishing said first selector signal (F) and a second state furnishing said second selector signal (1-F), and a clock input (CLK) receiving said regenerated vertical synchronization signal (VSYNC), whereby said state of said Q output of said flip-flop means (82) changes in response to said regenerated vertical synchronization signal (VSYNC) .

10. Apparatus as set forth in Claim 9, wherein each of said fields of said input signal comprises a first plurality of lines, said first plurality of lines comprising a second plurality of lines having video information to be displayed; the apparatus further comprising:
top line counter means (24) connected to said timing means (22; 78-82) for counting horizontal synchronization signals (H) following receipt of each of said selector signals (F) and generating a top line signal (TOP) when the count on said top line counter means (24) is indicative of the presence of the first of said plurality of lines.

11. Apparatus as set forth in Claim 10, wherein said line counter means (24) counts to a count of 5.

12. Apparatus as set forth in Claim 5, wherein said even field and said odd field each comprises a plurality of lines; the apparatus further comprising:
horizontal window signal furnishing means (94, 96) for generating a horizontal window signal (HW) having a first value for a first predetermined time period including occurrence of a horizontal synchronization signal in each of said lines, and a second value for the remainder of each of said lines; and
means (70) for blocking said vertical synchronization signals from said first means (22; 74-76) while said horizontal window signal (HW) has said first value during said output bottom field, and for transmitting the remaining ones of said vertical synchronization signals thereby generating VGATE signals.

13. Apparatus as set forth in Claim 12, wherein said blocking means (70) comprises a NAND gate.

14. Apparatus as set forth in Claim 12, further comprising second means (72) connected to said blocking means (70) and said first means (22; 74-76) for applying said VGATE signals to said first means (22; 74-76) for gating said first selector signal (F) and said terminal count signal.

15. Apparatus as set forth in Claim 1, wherein said first selector signal (F) and said second selector signal (1-F) together constitute a binary field signal having a first value constituting said first selector signal (F) and a second value constituting said second selector signal (1-F).

16. An apparatus as claimed in claim 1, wherein said top field information and said bottom field information are read from said first and second memory locations in dependence upon a second interlaced input signal having second even and odd fields, and second vertical (V) and horizontal synchronization signals, and wherein said reading means (28-36) comprise:
second field signal generating means (30; 74-76) responsive at least in part to said second vertical synchronization signals (V) for generating field signals (VTOP, VBOT) selecting one of said second fields as output top field and the other of said fields as output bottom field; and
second timing means (30; 78-82) coupled to said second field signal generating means (30; 74-76) and responsive at least in part to said second horizontal synchronization signals (H) for generating a first selector signal (F) indicative of the presence of an output top field and a second selector signal (1-F) indicative of the presence of an output bottom field, respectively, in response to said field signals (VTOP, VBOT).

17. An apparatus as claimed in claim 1, further comprising means (50, 52) for maintaining said first field selector signal (F) during receipt of the other of said even and odd fields when said recording means (19) and said readout means (36) are simultaneously operative in the same one of said groups of memory locations.

18. Method for generating a first selector signal (F) selecting an even field or an odd field of an input interlaced signal as top field and a second selector signal (1-F) selecting the other of said even field and said odd field as bottom field, said even field and said odd field having, respectively, even field and odd field vertical synchronization signals, each of said vertical synchronization signals having a sequence of horizontal synchronization signals associated therewith, comprising the steps of:
separating (12) said even and odd input vertical synchronization signals and said associated horizontal synchronization signals from said even and odd fields;
generating (22; 80) a first regenerated vertical synchronization signal (VSYNC) in response to said even field input vertical synchronization signal or said odd field input vertical synchronization signals and a predetermined one of the sequence of horizontal synchronization signals (H) associated therewith;
generating (80) a second regenerated vertical synchronization signal (VSYNC) in response to the other of said input vertical synchronization signals and a preselected one of said sequence of horizontal synchronization signals (H) associated therewith; and
generating (82) said selector signals (F, 1-F) in response to said first and second regenerated vertical synchronization signals (VSYNC), respectively.

## Patentansprüche

1. Vorrichtung zur Verarbeitung eines Zeilensprung-Videosignals mit geradzahligen und ungeradzahligen Teilbildern mit Speichermitteln (18) mit einer ersten und einer zweiten Gruppe von Speicherstellen; wobei diese Vorrichtung gekennzeichnet ist durch:
Mittel (10,12, 22, 24), die das genannte Zeilensprungsignal empfangen zur Erzeugung eines ersten Teilbildselektorsignals (F), das ein bliebigselektiertes Teilbild der genannten geradzahligen und ungeradzahligen Teilbilder als Ober-Teilbild bezeichnet, und eines zweiten Teilbildselektorsignal (1-F), das das Andere der genannten geradzahligen und ungeradzahligen Teilbilder als Unter-Teilbild bezeichnet;
Mittel (19), die mit den genannten Erzeugungsmitteln (10, 12, 22, 24) gekoppelt sind zur Aufzeichnung von Ober-Teilbildinformation an den genannten ersten Speicherstellen und Unter-Teilbildinformation an den genannten zweiten Speicherstellen und zwar unter Ansteuerung des genannten ersten (F) und des zweiten (1-F) Teilbildselektorsignals; und
Mittel (28-36) zum Auslesen der genannten Ober-Teilbildinformation und der genannten Unter-Teilbildinformation aus den genannten ersten und zweiten Speicherstellen.

2. Vorrichting nach Anspruch 1, wobei das genannte Zeilensprung-Videosignal Vertikal-(V)- und Horizontal-(H)-Synchronsignale aufweist und wobei die genannten Erzeugungsmittel (10, 12, 22, 24) die folgenden Elemente aufweisen:
Mittel (80, 72, 74) zum Liefern eines Ober-Teilbildsignals (VTOP) in Antwort auf ein Vertikal-Synchronsignal (V) mit einem nachfolgenden Horizontal-Synchronsignal (H);
Zählenmittel (84) die in Antwort auf das genannte Ober-Teilbildsignal (VTOP) rückgestellt werden zum Zählen von Horizontal-Synchronsignalen (H);
Mittel (76) zum Erzeugen eines Unter-Teilbildsignals (VBOT) bei Empfang eines nachfolgenden Signals der genannten Vertikal-Synchronsignale (V) und einer vorbestimmten Zählung an den genannten Zählmitteln (84); und
Mittel (78-82) zum Erzeugen der genannten Selektorsignale (F, 1-F) in Antwort auf das genannte Ober-(VTOP)- und Unter-(VBOT)-Teilbildsignals.

3. Vorrichtung nach Anspruch 1, wobei das genannte Videosignal Vertikal-(V)- und Horizontal-(H)-Synchronsignale aufweist und wobei die genannten Erzeugungsmittel (10, 12, 22, 24) die folgenden Elemente aufweisen:
Eingangsmittel (10, 12) zum Empfangen des genannten Zeilensprungsignals,
erste Mittel (22; 74-76), die mit den genannten Eingangsmitteln (10, 12) gekoppelt sind und die wenigstens teilweise auf die genannten Vertikal-Synchronsignale (V) reagieren zum Erzeugen eines Ober-Teilbildsignals (VTOP), indem das dann vorhandene Teilbild als Ober-Teilbild bezeichnet wird und eines Unter-Teilbildsignals (VBOT), wobei das nächste Teilbild als Unter-Teilbild bezeichnet wird; und
Zeitmittel (22; 78-82), die mit den genannten ersten Mitteln (22; 74-76) gekoppelt sind und die wenigstens teilweise für die genannten Horizontal-Synchronsignale (H) sorgen zum Erzeugen eines ersten Selektorsignals (F), das indikativ ist für das Vorhandensein eines Ober-Teilbildes und eines zweiten Selektorsignals (1-F), das indikativ ist für das Vorhandensein eines Unter-Teilbildes in Antwort auf die genannten Ober- und Unter-Teilbildsignale (VTOP, VBOT).

4. Vorrichtung nach Anspruch 3, weiterhin mit Mitteln (80-74) zum Zuführen des genannten zweiten Selektorsignals (1-F) zu den genannten ersten Mitteln (22; 74-76), so daß die genannten ersten Mittel das genannte erste Teilbildsignal (VTOP) liefern in Antwort auf ein Vertikal-Synchronsignal (V), das beim Vorhandensein des genannten zweiten Selektorsignals (1-F) empfangen worden ist.

5. Vorrichtung nach Anspruch 4, weiterhin mit Zählmitteln (84) mit einem Takteingang (CP), einem Rückstelleingang (R), und einem Endzählungsausgang (TC), der ein Endzählsignal liefert beim Empfang einer vorbestimmten Anzahl Horizontalsynchronimpulse (H), folgend auf das Rückstellen der genannten Zählmittel (84);
ersten Verbindungsmitteln zur Verbindung der genannten ersten Mittel (22; 74-76) mit dem genannten Rückstelleingang (R) zum Rückstellen der genannten Zählmittel (84) in Antwort auf das genannte erste Teilbildsignal (VTOP); und
Mittel zum Zuführen der genannten Horizontal-Synchronsignale (H) zu dem genannten Takteingang (CP).

6. Vorrichtung nach Anspruch 5, wobei die genannten ersten Mittel (22; 74-76) die nachfolgenden Elemente aufweisen:
Schaltmittel (76) mit einem Schalteingang zum Erzeugen des genannten zweiten Teilbildsignals (VBOT) in Antwort auf ein Schaltsignal an dem genannten Schalteingang; und
Mittel zum Verbinden des genannten Endzählungsausgangs (TC) der genannten Zählmittel (84) mit dem Schalteingang, so daß das genannte zweite Teilbildsignal (VBOT) bei Empfang des genannten Endzählungssignals auftritt.

7. Vorrichtung nach Anspruch 6, wobei das genannte Endzählungssignal bei einer Zählung von 5 geliefert wird.

8. Vorrichtung nach Anspruch 3, wobei die genannten Zeitgebermittel (22; 78-82) Mittel aufweisen zum Liefern eines regenerierten Vertikal-Synchronsignals (VSYNC) in Antwort auf jedes der genannten Teilbildsignale (VTOP, VBOT) und zum Beenden jedes der genannten regenerierten Vertikal-Synchronsignale (VSYNC) bei Empfang einer vorbestimmten Anzahl Horizontal-Synchronsignale (H).

9. Vorrichtung nach Anspruch 8, wobei die genannten Zeitgebermittel (22; 78-82) weiterhin Flipflopmittel (82) aufweisen mit einem Q-Ausgang mit einem ersten Zustand, der das genannte erste Selektorsignal (F) liefert und mit einem zweiten Zustand, der das genannte zweite Selektorsignal (1-F) liefert und mit einem Takteingang (CLK) der das genannte regenerierte Vertikal-Synchronsignal (VSYNC) empfängt, wobei der genannte Zustand des genannten Q-Ausganges der genannten Flipflopmittel (82) in Antwort auf das genannte regenerierte Vertikal-Synchronsignal (VSYNC) sich ändert.

10. Vorrichtung nach Anspruch 9, wobei jedes der genannten Teilbilder des genannten Eingangssignals eine erste Anzahl Zeilen aufweist, wobei diese erste Anzahl von Zeilen eine zweite Anzahl Zeilen aufweist mit wiederzugebender Videoinformation; wobei die Vorrichtung weiterhin die nachfolgenden Elemente aufweist:
Ober-Zeilen-Zählermittel (24), die mit den genannten Zeitgebermitteln (22; 78-82) verbunden sind zum Zählen von Horizontal-Synchronsignalen (H) die dem Empfang jedes der genannten Selektorsignale (F) folgen und ein Ober-Zeilensignal (TOP) erzeugen, wenn die Zählung an den genannten Ober-Zeilen-Zählmittel (24) indikativ ist für das Vorhandensein der genannten Anzahl Zeilen.

11. Vorrichtung nach Anspruch 10, wobei die genannten Zeilen-Zählmittel (24) bis zu 5 zählen.

12. Vorrichtung nach Anspruch 5, wobei das genannte geradzahlige Teilbild und das genannte ungeradzahlige Teilbild je eine Anzahl Zeilen aufweisen; wobei die Vorrichtung weiterhin die nachfolgenden Elemente aufweist:
Horizontal-Rahmensignallieferungsmittel (94, 96) zum Erzeugen eines Horizontal-Rahmensignals (HW) mit einem ersten Wert für eine erste vorbestimmte Zeitperiode mit dem Auftritt eines Horizontal-Synchronsignals in jeder der genannten Zeilen und einen zweiten Wert für die restlichen Zeilen; und
Mittel (70) zum Sperren der genannten Vertikal-Synchronsignale gegenüber den genannten ersten Mitteln (22; 74-76), während des genannten Horizontal-Rahmensignals (HW) den genannten ersten Wert hat während des genannten Ausgangsunterteilbildes, und zum Übertragen der übrigen Signale der genannten Vertikal-Synchronsignale, wobei VGATE-Signale erzeugt werden.

13. Vorrichtung nach Anspruch 12, wobei die genannten Sperrmittel (70) ein NAND-Gatter aufweisen.

14. Vorrichtung nach Anspruch 12, weiterhin mit zweiten Mitteln (72), die mit den genannten Sperrmitteln (70) und den genannten ersten Mitteln (22; 74-76) verbunden sind zum Zuführen der genannten VGATE-Signale zu den genannten ersten Mitteln (22; 74-76) zum Schalten des genannten ersten Selektorsignals (F) und des genannten Endzählungssignals.

15. Vorrichtung nach Anspruch 1, wobei das genannte erste Selektorsignal (F) und das genannte zweite Selektorsignal (1-F) zusammen ein binäres Teilbildsignal bilden mit einem ersten Wert, der das genannte erste Selektorsignal (F) bildet und mit einem zweiten Wert, der das genannte Zweite Selektorsignal (1-F) bildet.

16. Vorrichtung nach Anspruch 1, wobei die genannte Ober-Teilbildinformation und die genannte Unter-Teilbildinformation aus den genannten ersten und zweiten Speicherstellen ausgelesen werden und zwar abhängig von einem zweiten Zeilensprung-Eingangssignal mit zweiten geradzahligen und ungeradzahligen Teilbildern und eines zweiten .... mit zweiten Vertikal-(V)- und Horizontal-synchronsignalen und wobei die genannten Auslesemittel (28-36) die nachfolgenden Elemente aufweisen:
zweite Teilbildsignalerzeugungsmittel (30; 74-76), die wenigstens teilweise für die genannten zweiten Vertikal-synchronsignale (V) verantwortlich sind zur Erzeugung von Teilbildsignalen (VTOP, VBOT), wobei eines der genannten zweiten Teilbilder als Ausgangsoberteilbild und das Andere der genannten Teilbilder als Ausgangsunterteilbild gewählt wird; und
zweite Zeitgebermittel (30; 78-82), die mit den genannten zweiten Teilbildsignalerzeugungsmitteln (30; 74-76) gekoppelt sind und wenigstens teilweise für die genannten zweiten Horizontal-Synchronsignale (H) verantwortlich sind zur Erzeugung eines ersten Selektorsignals (F), das indikativ ist für das Vorhandensein eines Ausgangsoberteilbildes und eines zweiten Selektorsignals (1-F), das indikativ ist für das Vorhandensein eines Ausgangsunterteilbildes in Antwort auf die genannten Teilbildsignale (VTOP, VBOT).

17. Vorrichtung nach Anspruch 1, weiterhin mit Mitteln (50, 52) zum Beibehalten des genannten ersten Teilbildselektorsignals (F) bei Empfang des Anderen der genannten geradzahligen und ungeradzahligen Teilbilder, wenn die genannten Aufzeichnungsmittel (19) und die genannten Auslesemittel (36) gleichzeitig in derselben Gruppe der genannten Gruppen von Speicherstellen wirksam sind.

18. Verfahren zum Erzeugen eines ersten Selektorsignals (F), wobei ein geradzahliges Teilbild oder ein ungeradzahliges Teilbild eines Eingangszeilensprungsignals als Ober-Teilbild selektiert wird und eines zweiten Selektorsignals (1-F), wobei das andere des genannten geradzahligen Teilbildes und des genannten ungeradzahligen Teilbildes als Unter-Teilbild selektiert wird, wobei das genannte geradzahlige Teilbild und das genannte ungeradzahlige Teilbild geradzahlige Teilbild- und ungeradzahlige Teilbild-Vertikal-Synchronsignale aufweisen, wobei jedes der genannten Vertikal-Synchronsignale ein Folge zugeordneter Horizontal-Synchronsignale aufweist, wobei dieses Verfahren die nachfolgenden Verfahrensschritte umfaßt:
das Trennen (12) der genannten geradzahligen und ungeradzahligen Eingangs-Vertikal-Synchronsignale und der genannten zugeordneten Horizontal-Synchronsignale von den genannten geradzahligen und ungeradzahligen Teilbildern;
das Erzeugen (22; 80) eines ersten regenerierten Vertikal-Synchronsignals (VSYNC) in Antwort auf das genannte geradzahlige Teilbildeingangs-Vertikal-Synchronsignal oder das genannte ungeradzahlige Teilbild-eingangs-Vertikal-Synchronsignal und eines vorbestimmten Signals der Folge zugeordneter Horizontal-Synchronsignale (H);
das Erzeugen (80) eines zweiten regenerierten Vertikal-Synchronsignals (VSYNC) in Antwort auf das Andere der genannten Eingangs-Vertikal-Synchronsignale und eines vorselektierten Signals der genannten Folge zugeordneter Horizontal-Synchronsignale (H); und
das Erzeugen (82) der genannten Selektorsignale (F, 1-F) in Antwort auf die genannten ersten und zweiten regenerierten Vertikal-Synchronsignale (VSYNC).

## Revendications

1. Appareil pour le traitement d'un signal vidéo entrelacé ayant des trames paire et impaire, comprenant des moyens de mémorisation (18) comportant un premier et un deuxième groupes d'emplacements de mémoire, l'appareil étant caractérisé par :
des moyens (10, 12, 22, 24) couplés pour recevoir ledit signal entrelacé en vue de générer un premier signal sélecteur de trame (F) signifiant qu'une trame sélectionnée arbitrairement parmi lesdites trames paire et impaire sera la trame supérieure, et un deuxième signal sélecteur de trame (1-F) signifiant que l'autre desdites trames paire et impaire sera la trame inférieure;
des moyens (19) couplés auxdits moyens générateurs (10, 12, 22, 24) pour enregistrer des informations sur la trame supérieure dans lesdits premiers emplacements de mémoire et des informations sur la trame inférieure dans lesdits deuxièmes emplacements de mémoire sous le contrôle dudit premier (F) et dudit deuxième (1-F) signaux sélecteurs de trames, respectivement, et
des moyens (28-36) pour extraire lesdites informations sur la trame supérieure et lesdites informations sur la trame inférieure desdits premiers et deuxièmes emplacements de mémoire.

2. Appareil selon la revendication 1, dans lequel ledit signal vidéo entrelacé comprend des signaux de synchronisations verticale (V) et horizontale (H), et lesdits moyens générateurs (10, 12, 22, 24) comprennent :
des moyens (80, 72, 74) pour délivrer un signal de trame supérieure (VTOP) en réaction à un signal de synchronisation verticale (V) suivi d'un signal de synchronisation horizontale (H);
des moyens de comptage (84) remis à zéro en réaction audit signal de trame supérieure (VTOP) pour compter des signaux de synchronisation horizontale (H);
des moyens (76) pour générer un signal de trame inférieure (VBOT) lors de la réception d'un signal ultérieur desdits signaux de synchronisation verticale (V) et d'un comptage prédéterminé sur lesdits moyens de comptage (84), et
des moyens (78-82) pour générer lesdits signaux sélecteurs (F, 1-F) en réaction audit signaux de trame supérieure (VTOP) et de trame inférieure (VBOT).

3. Appareil selon la revendication 1, dans lequel ledit signal vidéo comporte des signaux de synchronisations verticale (V) et horizontale (H) et lesdits moyens générateurs (10, 12, 22, 24) comprennent :
des moyens d'entrée (10, 12) pour recevoir ledit signal entrelacé;
des premiers moyens (22; 74-76) couplés auxdits moyens d'entrée (10, 12) et sensibles au moins en partie auxdits signaux de synchronisation verticale (V) pour générer un signal de trame supérieure (VTOP) sélectionnant la trame alors présente comme trame supérieure et un signal de trame inférieure (VBOT) sélectionnant la trame suivant immédiatement comme trame inférieure, et
des moyens de synchronisation (22; 78-82) couplés auxdits premiers moyens (22; 74-76) et sensibles au moins en partie auxdits signaux de synchronisation horizontale (H) pour générer un premier signal sélecteur (F) indicatif de la présence d'une trame supérieure et un deuxièine signal sélecteur (1-F) indicatif de la présence d'une trame inférieure, respectivement, en réaction auxdits signaux de trame supérieure et de trame inférieure (VTOP, VBOT), respectivement.

4. Appareil selon la revendication 3, comprenant, en outre, des moyens (80-74) pour appliquer ledit deuxième signal sélecteur (1-F) auxdits premiers moyens (22; 74-76), de telle sorte que lesdits premiers moyens délivrent ledit premier signal de trame (VTOP) en réaction à un signal de synchronisation verticale (V) reçu en présence dudit deuxième signal sélecteur (1-F).

5. Appareil selon la revendication 4, comprenant, en outre, des moyens de comptage (84) ayant une entrée d'horloge (CP), une entrée de remise à zéro (R) et une sortie de comptage terminal (TC) délivrant un signal de comptage terminal à la réception d'un nombre prédéterminé de signaux de synchronisation horizontale (H) après remise à zéro desdits moyens de comptage (84);
des premiers moyens de connexion pour connecter lesdits premiers moyens (22; 74-76) à ladite entrée de remise à zéro (R) pour remettre à zéro lesdits moyens de comptage (84) en réaction audit premier signal de trame (VTOP), et
des moyens pour appliquer lesdits signaux de synchronisation horizontale (H) à ladite entrée d'horloge (CP).

6. Appareil selon la revendication 5, dans lequel lesdits premiers moyens (22; 74-76) comprennent :
des moyens à porte (76) ayant une entrée de porte pour générer ledit deuxième signal de trame (VBOT) en réaction à un signal de porte à ladite entrée de porte, et
des moyens pour connecter ladite sortie de comptage terminal (TC) desdits moyens de comptage (84) à ladite entrée de porte, de telle sorte que ledit deuxième signal de trame (VBOT) se présente lors de la réception dudit signal de comptage terminal.

7. Appareil selon la revendication 6, dans lequel ledit signal de comptage terminal est délivré après un comptage de 5.

8. Appareil selon la revendication 3, dans lequel lesdits moyens de synchronisation (22; 78-82) comprennent des moyens pour délivrer un signal de synchronisation verticale régénérée (VSYNC) en réaction à chacun desdits signaux de trame (VTOP, VBOT) et pour terminer chacun desdits signaux de synchronisation verticale régénérée (VSYNC) après réception d'un nombre prédéterminé de signaux de synchronisation horizontale (H).

9. Appareil selon la revendication 8, dans lequel lesdits moyens de synchronisation (22; 78-82) comprennent, en outre, des moyens à bascule (82) ayant une sortie Q présentant un premier état délivrant ledit premier signal sélecteur (F) et un deuxième état délivrant ledit deuxième signal sélecteur (1-F), et une entrée d'horloge (CLK) recevant ledit signal de synchronisation verticale régénérée (VSYNC), de sorte que ledit état de ladite sortie Q desdits moyens à bascule (82) change en réaction audit signal de synchronisation verticale régénérée (VSYNC).

10. Appareil selon la revendication 9, dans lequel chacune desdites trames dudit signal d'entrée comprend une première pluralité de lignes, ladite première pluralité de lignes comprenant une deuxième pluralité de lignes ayant des informations vidéo à afficher, l'appareil comprenant, en outre :
des moyens de comptage de ligne supérieure (24) connectés auxdits moyens de synchronisation (22; 78-82) pour compter les signaux de synchronisation horizontale (H) après réception de chacun desdits signaux sélecteurs (F) et générer un signal de ligne supérieure (TOP) lorsque le comptage sur lesdits moyens de comptage de ligne supérieure (24) est indicatif de la présence de la première de ladite pluralité de lignes.

11. Appareil selon la revendication 10, dans lequel lesdits moyens de comptage de ligne (24) comptent jusqu'à un comptage de 5.

12. Appareil selon la revendication 5, dans lequel ladite trame paire et ladite trame impaire comprennent chacune une pluralité de lignes, l'appareil comprenant, en outre :
des moyens de délivrance de signaux de fenêtre horizontale (94, 96) pour générer un signal de fenêtre horizontale (HW) ayant une première valeur pendant une période de temps prédéterminée comprenant l'apparition d'un signal de synchronisation horizontale dans chacune desdites lignes, et une deuxième valeur pour le restant de chacune desdites lignes, et
des moyens (70) pour bloquer lesdits signaux de synchronisation verticale provenant desdits premiers moyens (22; 74-76), tandis que ledit signal de fenêtre horizontale (HW) possède ladite première valeur au cours de ladite trame inférieure de sortie, et pour transmettre les signaux restants desdits signaux de synchronisation verticale de manière à générer des signaux VGATE.

13. Appareil selon la revendication 12, dans lequel lesdits moyens de blocage (70) comprennent une porte NON-ET.

14. Appareil selon la revendication 12, comprenant, par ailleurs, des deuxièmes moyens (72) connectés auxdits moyens de blocage (70) et auxdits premiers moyens (22; 74-76) pour appliquer lesdits signaux VGATE auxdits premiers moyens (22; 74-76) afin de débloquer ledit premier signal sélecteur (F) et ledit signal de comptage terminal.

15. Appareil selon la revendication 1, dans lequel ledit premier signal sélecteur (F) et ledit deuxième signal sélecteur (1-F) constituent ensemble un signal de trame binaire ayant une première valeur constituant ledit premier signal sélecteur (F) et une deuxième valeur constituait ledit deuxième signal sélecteur (1-F).

16. Appareil selon la revendication 1, dans lequel lesdites informations sur la trame supérieure et lesdites informations sur la trame intérieure sont extraites desdits premier et deuxième emplacements de mémoire en fonction d'un deuxième signal d'entrée entrelacé ayant des deuxièmes trames paire et impaire et de deuxièmes signaux de synchronisations verticale (V) et horizontale, et dans lequel lesdits moyens d'extraction (28-36) comprennent :
des deuxièmes moyens générateurs de signaux de trame (30; 74-76) sensibles au moins en partie auxdits deuxièmes signaux de synchronisation verticale (V) pour générer des signaux de trame (VTOP, VBOT) en sélectionnant l'une desdites deuxièmes trames comme trame supérieure de sortie et l'autre desdites trames comme trame inférieure de sortie, et
des deuxièmes moyens de synchronisation (30; 78-82) couplés auxdits deuxièmes moyens générateurs de signaux de trame (30; 74-76) et sensibles au moins en partie auxdits deuxièmes signaux de synchronisation horizontale (H) pour générer un premier signal sélecteur (F) indicatif de la présence d'une trame supérieure de sortie et un deuxième signal sélecteur (1-F) indicatif de la présence d'une trame inférieure de sortie, respectivement, en réaction auxdits signaux de trame (VTOP, VBOT).

17. Appareil selon la revendication 1, comprenant, en outre, des moyens (50, 52) pour maintenir ledit premier signal sélecteur de trames (F) au cours de la réception de l'autre desdites trames paire et impaire lorsque lesdits moyens d'enregistrement (19) et lesdits moyens d'extraction (36) opèrent simultanément dans le même groupe desdits groupes d'emplacements de mémoire.

18. Procédé pour la génération d'un premier signal sélecteur (F) sélectionnant une trame paire ou une trame impaire d'un signal entrelacé d'entrée comme trame supérieure et d'un deuxième signal sélecteur (1-F) sélectionnant l'autre desdites trames paire et impaire comme trame inférieure, ladite trame paire et ladite trame impaire ayant, respectivement, des signaux de synchronisation verticale respectifs, chacun desdits signaux de synchronisation verticale ayant une séquence de signaux de synchronisation horizontale qui leur est associée, procédé comprenant les étapes suivantes :
on sépare (12) lesdits signaux de synchronisation verticale d'entrée pairs et impairs et lesdits signaux de synchronisation horizontale associés desdites trames paire et impaire;
on génère (22; 80) un premier signal de synchronisation verticale régénérée (VSYNC) en réaction auxdits signaux de synchronisation verticale d'entrée de trames paires ou auxdits signaux de synchronisation verticale d'entrée de trames impaires et un signal prédéterminé de la séquence de signaux de synchronisation horizontale (H) qui leur est associée;
on génère (80) un deuxième signal de synchronisation verticale régénérée (VSYNC) en réaction à l'autre desdits signaux de synchronisation verticale d'entrée et un signal présélectionné de ladite séquence de signaux de synchronisation horizontale (H) qui leur est associée, et
on génère (82) lesdits signaux sélecteurs (F, 1-F) en réaction auxdits premiers et deuxièmes signaux de synchronisation verticale régénérée (VSYNC), respectivement.
